# EUROPEAN PATENT APPLICATION

(11) **EP 2 339 201 A1**
(43) Date of publication of application: **29.06.2011**
(21) Application number: 09382295.5
(22) Date of filing: 22.12.2009
(51) Int. Cl.: F16F 1/12, F16F 3/02

(54) **Coiled device**

(71) Applicant: Eads Construcciones Aeronauticas S.A., 28022 Madrid (ES)
(72) Inventor: Martinez Vázquez, Bruno, E-28906, Getafe - Madrid (ES); Flores Giraldo, Santiago, E-28906, Getafe - Madrid (ES)
(74) Representative: ABG Patentes, S.L.

(57) **Abstract**

The present invention relates to a coiled device allowing the connection between two points separated by a variable distance. The use of one or more guides improving the mechanical elongation conditions of the coiled device characterizes the invention. The main application of the invention is in electric conductor cables, tubular conduits and others which use a coiled configuration to allow establishing the connection between two points the separation of which is variable.

## Description

### Object of the Invention

The present invention relates to a coiled device allowing the connection between two points separated by a variable distance.

The use of one or more guides improving the mechanical elongation conditions of the coiled device characterizes the invention.

The main application of the invention is in electric conductor cables, tubular conduits and others which use a coiled configuration to allow establishing the connection between two points the separation of which is variable.

### Background of the Invention

In engineering, it is common to have requirements for the connection between two points the separation of which is variable. For example, in articulated or telescopic arms, the transmission of a signal or of an electric current between two mobile points requires the conductor to be able to maintain the connection even though the distance between the ends thereof is variable.

This requirement is very common in signal transmission but it is also possible in other types of applications, such as the pneumatic application in which the transport is of a fluid through a tubular element.

A commonly used solution in the connection between these two distant points consists of making use of coiled devices. In electrical applications, the devices are coiled cables and in the transport of fluids, they are tubes with a coiled configuration.

From the mechanical point of view, a coiled device acts like a spring. The configuration and parameters of the spring, i.e., the largest coil diameter, the thickness of the coiled element, its mechanical properties, the number of coils and the coil pitch determines the degree of rigidity and the elongation due to a certain stress.

If a spring working under tension excessively elongates, the spring can experience permanent deformations which will involve the loss of rigidity and elastic characteristics, and therefore its functionality, and structural damages which can affect, for example, the conduction capacity if it is an electric cable, may possibly occur.

If the same spring works under compression, then buckling may easily occur, and as a result so may bulging and even crossing or knotting occur.

In practice, other additional technical problems in the use of coiled devices of great length or with a high number of coils are observed under tension, where the stretching of the cable does not occur uniformly, but rather it occurs to a greater degree in areas close to where the load is applied. As a result, the coils closest to the point of application of the load stretch to a greater degree, reaching the allowable limits before the remaining coils. The result is having a more reduced elongation limit of the entire coiled device compared with the limit that would exist if elongation was homogenous.

As a result, there are other technical problems, such as the occurrence of locally located permanent deformations due to the excessive elongation in any section; or, for example, knotting when the coiled device is compressed again.

Due to specific design conditioning factors for each application, in some cases it is not possible to obtain the desired rigidity. For example, in very thick electric cables, because they have a large number of conductors, in some applications it is not possible to incorporate a substantial amount of insulating material and it is the latter which confers the spring shape and provides the rigidity. Furthermore, the outer diameter of the spring in many applications cannot be increased to compensate the increased thickness due to space limitations.

### Description of the Invention

The present invention consists of a coiled device which allows connecting two distant points which, in the operative mode, can vary the separation distance thereof. This device according to the invention solves the technical problems posed and for that purpose comprises an essentially one-dimensional element which, in the operative mode, is what establishes the connection between the two points separated by a variable distance and in which this one-dimensional element is configured in a coiled shape about a geometric guiding axis. This geometric guiding axis is the segment of the guideline which determines the path through which the coil-shaped element extends. This guideline can be a curved line.

The device additionally comprises a guide arranged coaxial with the geometric guiding axis of the coil-shaped element and in which this guide extends along the geometric guiding axis of the coil-shaped element.

It has been experimentally proven that the presence of this guide extending along the geometric guiding axis of the coil-shaped element has the effect of improving the mechanical behavior of the assembly.

The various ways of configuring the guide for the coil-shaped element resulting from the combination of dependent claims 2 to 10 are also considered within the same invention and are incorporated in this description by reference. Other technical problems are additionally solved in such embodiments.

### Description of the Drawings

These and other features and advantages of the invention will become clearer from the following detailed description of a preferred embodiment provided only by way of non-limiting illustration, with reference to the attached drawings.
Figure 1 shows a coil-shaped element, for example a spring, before and after being subjected to tension as it is known in the prior art.
Figure 2 shows another coil-shaped element, secured at its lower part and subjected to a compression force which is exerted from its upper part, and as is known in the prior art, it experiences buckling as a response once the value of the force exceeds a certain critical value.
Figure 3 shows a portion of a coil-shaped element incorporating a guide element running along its geometric axis according to the invention.
Figure 4 shows the section of a one-dimensional coil-shaped element of the prior art in which the problem of non-homogenous elongation due to tension in one of its ends is observed.
Figure 5 shows an embodiment of the invention in which the problem of greater elongation at the ends in which the tension occurs is solved.
Figure 6a and 6b show a portion of the previous embodiment without tension and subject to tension in order to allow observing the reasons that allow resolving the technical problem.
Figure 7 shows a second embodiment of the invention which also solves the problem of greater elongation at the ends in which the tension occurs.
Figure 8a and 8b show a portion of the previous embodiment without tension and subjected to tension in order to allow observing the reasons that allow resolving the technical problem.
Figure 9 shows a detail of an embodiment of how to establish a link between the inner guide and the coiled element.

### Detailed Description of the Invention

The present invention consist of a device based on a coiled element (E) of the type that allows establishing the connection between two points that are far from one another which, in the operative mode, vary in their separation distance. This is the case, for example, of a coiled conductor connecting two points of an articulated arm. The device of the invention offers better mechanical behavior than the coiled elements (E) operating alone as they are known in the prior art.

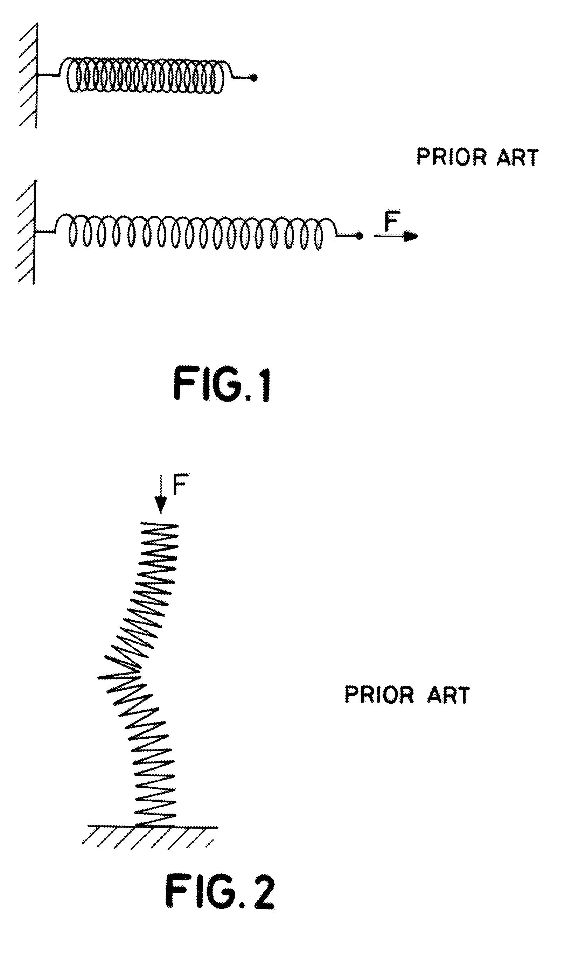

Figure 1 shows a coil-shaped element (E), as it is known in the prior art, connecting two ends. One of the ends is attached to a fixed base and the other end is mobile, i.e., the end to which the tension force F is applied as shown in the depiction at the bottom of the same Figure 1.

Figure 2 shows a coil-shaped element (E) arranged vertically on a fixed base and on the upper part of which a compression force F is applied. When the compression force F exceeds a critical value, the coil-shaped element (E) buckles as is known in the prior art.

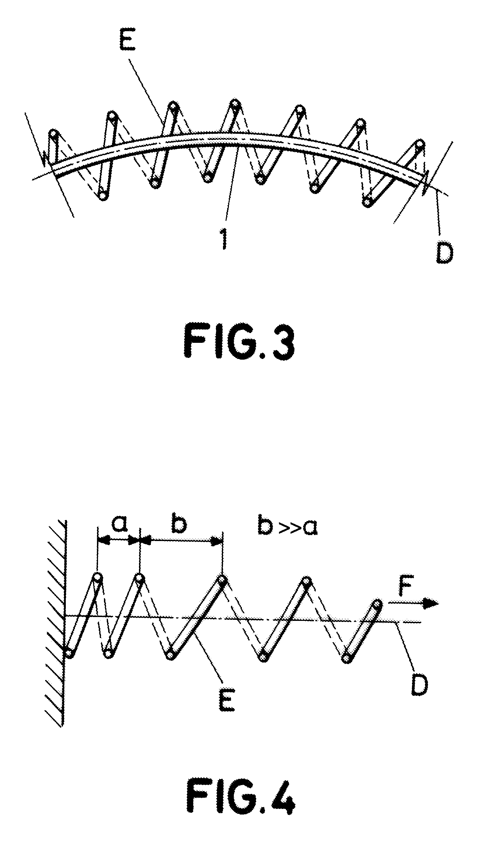

Figure 3 is a schematic depiction of a portion of a device according to an embodiment of the invention in which the coil-shaped element (E) internally incorporates a guide (1) extending along the geometric guiding axis (D) of the coil-shaped element (E).

This same embodiment shows how the device can adopt a curved configuration of its guiding axis. The presence of an inner guide reduces the possibility of the occurrence of unwanted bulging, bending or buckling which lead to constrictions that damage the coil-shaped element (E).

Coil-shaped elements (E) additionally have the problem that is shown in Figure 4, in which upon being subjected to tension, the degree of extension of coil-shaped element (E) is greater at said end in which the extension force (F) is applied. In this particular case, the greatest extension in the end area makes this end area reach the allowable limits of deformation first, therefore, if said allowable limit of deformation is not to be exceeded at any point, the extension capacity of the central portion is wasted.

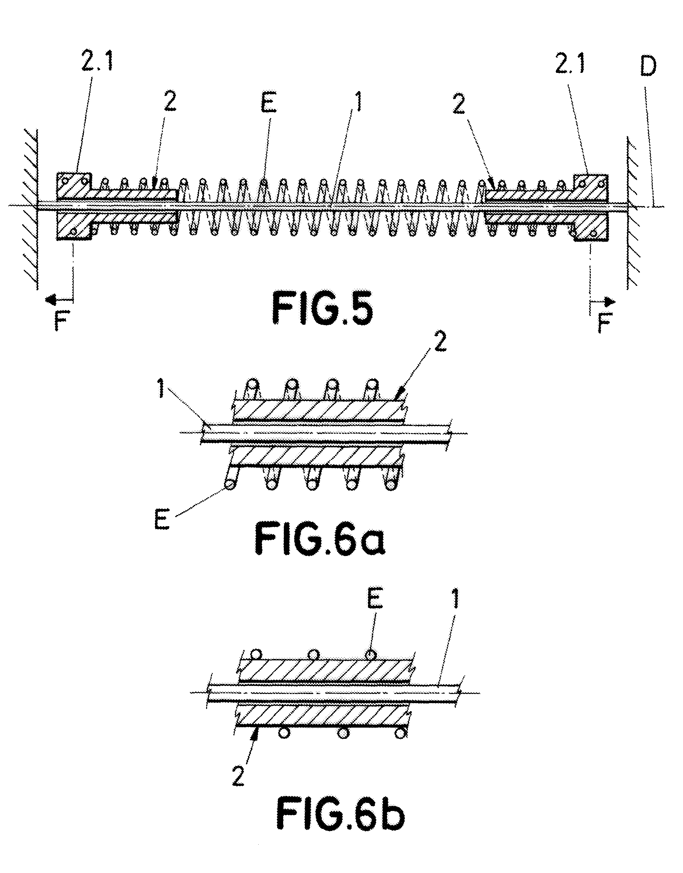

A particular way of carrying out the invention solves this particular problem. Figure 5 shows an embodiment of this particular way of carrying out the invention in which there is an inner guide (1) extending between two points passing through the inside of the coil-shaped element (E). The ends of the coil-shaped element (E) are connected to bushings (2) which are located between the inner guide (1) and the coil-shaped element (E). The extension of the coil-shaped element (E) leads to a reduction of the diameter of its coils. Since the greatest degree of extension of the coil-shaped element (E) occurs at the ends, it will also be at said ends where the reduction of the diameter of the coils begins, which results in there being a greater degree of reduction in said areas than in other areas at all times.

The bushings (2) are sized such that their outer diameter limits the reduction of the diameter of the coils of the coil-shaped element (E) with dimensions assuring that the allowable tension in the coil-shaped element (E) is not exceeded.

In this example, it is observed that the bushings (2) are connected to the ends of the coil-shaped element (E) in an attachment projection (2.1), therefore, the extension of the coil-shaped element (E) occurs due to the separation between the bushings (2) connected at the ends.

When the degree of extension is such that the coils come into contact with the outer surface of the bushing (2), the coil cannot reduce its diameter to the greater degree and the tension is transmitted to the coils located closest to the central area. The overall effect of the propagation of the tension is that of distributing the degree of extension and deformation along the length of the coil-shaped element (E).

Although claim 2 establishes the lower limit of the outer diameter of the bushing (2) as being at least equal to the minimum diameter that the coils of the coil-shaped element (E) must reach so as to not experience permanent damage in their extension due to tension, it must be interpreted that this is a lower limit and therefore there can be embodiments in which the diameter is greater establishing a safety factor which prevents the presence of permanent deformations in the coil-shaped element (E).

Figure 6a shows the coil-shaped element (E) without tension in which its coils have an inner diameter greater than the outer diameter of the bushing (2). Figure 6b shows the coil-shaped element (E) under tension until having reached the outer diameter of the bushing (2) reaching the limit of extension in that area and causing the extension to occur in other areas that are always located towards the central area of the coil-shaped element (E).

This solution also corresponds to the embodiments arising from the combination of dependent claims 2 to 4, as well as claim 9 in which such combinations are incorporated in this description by reference.

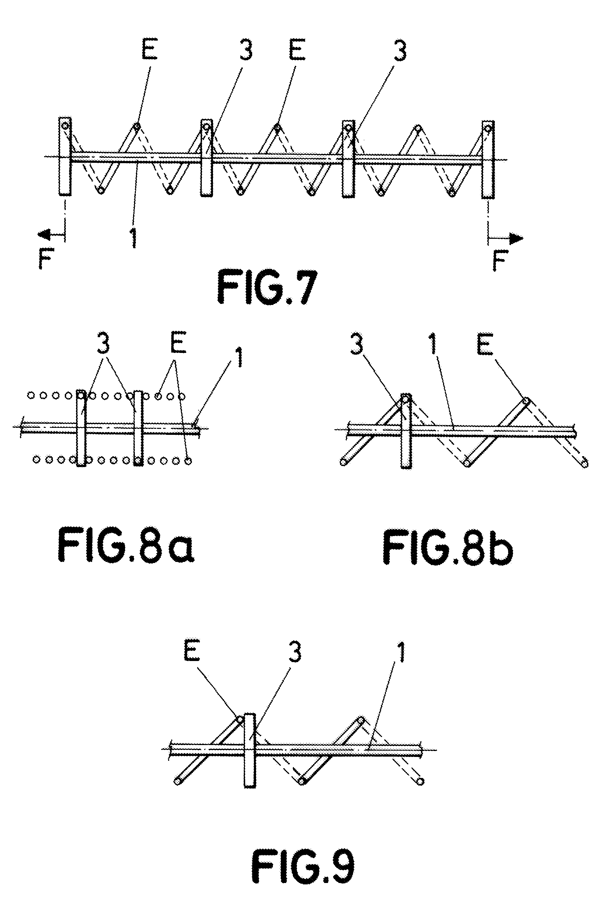

The same technical problem, i.e., the occurrence of a greater extension of the coil-shaped element (E) at the ends in which the tension load is applied, is solved by means of the embodiment shown in Figure 7.

In this case, the coil-shaped element (E) is connected to the inner guide (1) through its ends. The inner guide (1) in this embodiment is elastic such that the extension of the coil-shaped element (E) and of the inner guide (1) occurs simultaneously before the tension of the ends of the device.

Since the inner guide (1) is not a coil-shaped element (E), its behavior is not to have a greater degree of extension at the ends but rather its degree of tension is homogeneous.

This inner elastic guide (1) incorporates in this embodiment anchors (3) linking at least one intermediate points of the inner guide (1) with a point of the coil-shaped element (E).

The tension applied to the ends causes a degree of uniform extension in the inner guide (1), therefore there tends to be an offset between the inner guide (1) and the coil-shaped element (E). This offset is prevented with anchors (3), which are responsible for establishing an attachment link between the two points, a point of the inner guide (1) and the coil-shaped element (E), since they transmit the displacement of the inner guide (1) to the coil-shaped element (E), making the extension of this second (E) more homogeneous.

Figure 8a shows the device without being subjected to tension and in which the anchors link the guide (1) to the coil-shaped element (E) at equally distributed points, for example.

Figure 8b shows the same portion of Figure 8a under tension. Figure 9 shows a particular embodiment of anchor (3) establishing the link by simple support. The support is intended to be on the face which corresponds to favoring the inner guide (1) being the component that pushes the coil-shaped element (E).

This solution also corresponds to the embodiments arising from the combination of dependent claims 5 to 8, as well as claim 9 in which such combinations are incorporated in this description by reference.

Incorporating an outer guide in the form of a tubular body with elongation capacity is likewise considered a way of carrying out the invention, although it is not depicted in the drawings. The compression of the coil-shaped element (E) leads to an increase in the diameter of the coils. The diameter of the tubular body must be at least the maximum diameter that the coil-shaped element (E) is to reach under compression.

The outer guide allows, for example, protecting the coiled cable, and preventing its buckling, or the occurrence of the so-called bulging when the cable is compressed.

## Claims

1. A coiled device comprising an essentially one-dimensional element (E) which in the operative mode is intended for connecting two points separated by a variable distance, wherein this one-dimensional element is configured in a coiled shape about a geometric guiding axis (D) **characterized in that** it comprises a guide (1) arranged coaxial with the geometric guiding axis (D) of the coil-shaped element (E) and wherein this guide (1) extends internally along said geometric guiding axis (D) of the coil-shaped element (E).

2. The device according to claim 1, **characterized in that** it comprises a bushing (2) in which a portion of said bushing (2) is located between the guide (1) and the coil-shaped element (E) such that:
a) the guide (1) passes through the inside of the bushing (2),
b) the bushing (2) is connected (2.1) to an end of the coil-shaped element (E),
c) the outer diameter of the bushing (2) in the portion which is located between the guide (1) and the coil-shaped element (E) is at least equal to the minimum diameter that the coils of the coil-shaped element (E) must reach so as to not experience permanent damage in their extension due to tension.

3. The device according to claim 2, **characterized in that** it comprises two bushings (2) verifying conditions a), b) and c), such that each bushing is connected to an end of the coil-shaped element (E).

4. The device according to claim 2, **characterized in that** at least the attachment between a bushing (2) and the coil-shaped element (E) is carried out in a projection of the bushing (2).

5. The device according to claim 1, **characterized in that** the guide (1) is elastic and its ends are connected to the ends of the coil-shaped element (E) such that:
• the extension of the coil-shaped element (E) causes the simultaneous extension of the elastic guide (1),
• there is at least one intermediate attachment link between the elastic guide (1) and the coil-shaped element (E) which prevents the existence of an offset in the extension of both between such points.

6. The device according to claim 5, **characterized in that** there is a plurality of intermediate attachment links between the elastic guide (1) and the coil-shaped element (E) to prevent the existence of an offset between such points in the extension of both.

7. The device according to claim 6, **characterized in that** the points where there is a link between the elastic guide (1) and the coil-shaped element (E) are equally spaced.

8. The device according to any of claims 5 to 7, **characterized in that** the link is carried out by means of an anchor (3) having at least one support face such that the linking occurs by simple support of a coil of the coil-shaped element (E) on said face and wherein the support face is oriented such that it is the inner guide (1) that drags the coil in the operative mode in the extension due to the application of a force.

9. The device according to any of the previous claims, **characterized in that** the coil-shaped element is an electric cable or a tubular conduit.

10. The device according to any of the previous claims, **characterized in that** it has an outer guide the inner diameter of which is at least the maximum diameter to be reached by the coil-shaped element (E) under compression.
